# EUROPEAN PATENT APPLICATION

(11) **EP 2 980 943 A1**
(43) Date of publication of application: **03.02.2016**
(21) Application number: 14775562.3
(22) Date of filing: 26.03.2014
(51) Int. Cl.: H02H 7/00, B60L 11/18, H02J 7/00

(54) **ELECTRIC POWER UNIT FOR VEHICLE**

(30) Priority: 27.03.2013 JP 2013067246
(71) Applicant: Panasonic Intellectual Property Management Co., Ltd., Osaka-shi, Osaka 540-6207 (JP)
(72) Inventor: YOSHIZAWA, Jin, Osaka 540-6207 (JP); TANABE, Mitsuru, Osaka 540-6207 (JP)
(74) Representative: Appelt, Christian W.
(86) International application number: PCT/JP2014/001752
(87) International publication number: WO 2014/156150

(57) **Abstract**

A first voltmeter (45) measures a voltage of a connector (3) held by a holder (4) of a vehicle power device. A second voltmeter (15) measures a voltage of a second port (114) of a power converter (1) when the connector (3) is held by the holder (4). A controller (12) detects presence or absence of a malfunction in a connector-side switch (30) based on: measurement results of the voltmeters while controlling the connector-side switch (30) so that electrical connection between the second port (114) and the connector (3) is broken; and measurement results of the voltmeters while controlling the connector-side switch (30) so that the electrical connection is made.

## Description

### Technical Field

The invention relates to a vehicle (electric) power device as an electric (drive) vehicle charging device or an electric (drive) vehicle charging and discharging device (an electric (drive) vehicle charging device having a discharging function).

### Background Art

Environmentally friendly electric drive vehicles with less toxic exhaust have been recently introduced in markets, thereby diffusing vehicle power devices that allow a storage battery of an electric drive vehicle to charge and discharge. Examples of the electric drive vehicle include an electric vehicle (EV), a plug-in hybrid electric vehicle (PHEV) and the like.

For example, JP Pub. No. 2010-259277 discloses an electric vehicle charging stand. The electric vehicle charging stand includes a charging connector and a charging cable. The charging connector is held by a holding connector as a holder when the electric vehicle charging stand is not used. The holding connector is provided therein with wires for checking respective wire breaks. The checking respective wire breaks are automatically started with the charging connector plugged in the holding connector when a restriction means is released. When there is no malfunction in the checking, charging is automatically started if self-check of a vehicle finishes after the charging connector is connected with a vehicle-side connector.

In another example, a vehicle power device may be provided with not only a function configured to charge a storage battery of an electric drive vehicle but also a function configured to perform electrical discharge from the storage battery of the electric drive vehicle to a household load(s) (V2H) and electrical discharge from the storage battery to a utility grid (V2G).

On the other hand, the electric drive vehicle is provided with a vehicle-side switch (a vehicle contactor) for cutting off a power line thereof when a malfunction occurs. Weld diagnosis is to be made for the vehicle-side switch in the sequence for starting charging.

The power line cannot be however cut off when a weld occurs in the vehicle-side switch by some factors. It is therefore desirable that a switch be provided in a connector (a charging connector) of the vehicle power device such as an electric vehicle charging stand for safety thereof, thereby turning off the switch in the connector when a malfunction occurs to cut off the power line.

However, even if the switch is provided in the connector, a malfunction such as a weld may occur in the switch.

### Summary of Invention

The present invention has been achieved in view of the above circumstances, and an object thereof is to provide a vehicle power device capable of making malfunction diagnosis for a switch provided in a connector.

A vehicle power device according to the invention includes a power converter (1), an electric cable (2), a connector (3), a holder (4) and a voltage generator (44). The power converter (1) includes a first port (111) and a second port (114) and is configured to, at least, convert electric power from the first port (111) into direct-current power to supply the direct-current power to a storage battery (51), which an electric drive vehicle (5) is equipped with, through the second port (114). The electric cable (2) includes a first electric wire (21) and a second electric wire (22), respective first ends (211 and 221) of which are connected to the second port (114). The connector (3) includes a first electrode (31) and a second electrode (32) and is configured so that the first and second electrodes (31 and 32) are detachably connected to an inlet (52) of the electric drive vehicle (5). The holder (4) is configured to hold the connector (3) with the connector (3) and the inlet (52) disconnected from each other. The voltage generator (44) is configured to apply a voltage across the first and second electrodes (31 and 32) of the connector (3) held by the holder (4). The connector (3) further includes a connector-side switch (30) configured to make and break electrical connection between the second port (114) of the power converter (1) and the first and second electrodes (31 and 32). The holder (4) further comprises a first voltmeter (45) configured to measure a voltage between the first and second electrodes (31 and 32) of the connector (30) held by the holder (4). The power converter (1) includes a second voltmeter (15) and a controller (12). The second voltmeter (15) is configured to measure a voltage of the second port (114) when the connector (3) is held by the holder (4).

The controller (12) is configured to detect presence or absence of a malfunction in the connector-side switch (30) based on: measurement results of the first and second voltmeters (45 and 15) while controlling the connector-side switch (30) so that the electrical connection is broken; and measurement results of the first and second voltmeters (45 and 15) while controlling the connector-side switch (30) so that the electrical connection is made.

In an embodiment, the power converter (1) is further configured to convert direct-current power supplied from the storage battery (51) via the second port (114) into electric power for the first port (111) to supply the electric power to an outside via the first port (111).

In an embodiment, the holder (4) further includes a discharge circuit that includes a series circuit of a discharge device (46) and a switch (47) and is configured, in accordance with control by the controller (12), to be temporarily connected between the first and second electrodes (31 and 32) of the connector (3) held by the holder (4).

In an embodiment, the holder (4) is provided with the voltage generator (44).

In an embodiment, the connector-side switch (30) includes first and second switches (301 and 302) configured to be individually controlled by the controller (12). The first switch (301) is configured to make and break electrical connection between the second port (114) of the power converter (1) and the first electrode (31) in accordance with ON and OFF control by the controller (12), respectively. The second switch (302) is configured to make and break electrical connection between the second port (114) of the power converter (1) and the second electrode (32) in accordance with ON and OFF control by the controller (12), respectively. The controller (12) is configured to detect the presence or absence of the malfunction in the connector-side switch (30) based on: measurement results of the first and second voltmeters (45 and 15) while controlling the connector-side switch so that both the first and second switches (301 and 302) are turned off; measurement results of the first and second voltmeters (45 and 15) while controlling the connector-side switch so that the first and second switches (301 and 302) are turned off and on, respectively; and measurement results of the first and second voltmeters (45 and 15) while controlling the connector-side switch so that the first and second switches (301 and 302) are turned on and off, respectively.

In an embodiment, the connector-side switch (30) includes first and second switches (301 and 302) configured to be controlled together by the controller (12). The first switch (301) is configured to make and break electrical connection between the second port (114) of the power converter (1) and the first electrode (31) in accordance with ON and OFF control by the controller (12), respectively. The second switch (302) is configured to make and break electrical connection between the second port (114) of the power converter (1) and the second electrode (32) in accordance with ON and OFF control by the controller (12), respectively. The controller (12) is configured to detect the presence or absence of the malfunction in the connector-side switch (30) based on: measurement results of the first and second voltmeters (45 and 15) while controlling the connector-side switch so that both the first and second switches (301 and 302) are turned off; and measurement results of the first and second voltmeters (45 and 15) while controlling the connector-side switch so that both the first and second switches (301 and 302) are turned on.

In an embodiment, the vehicle power device further includes a connector detector (45) configured to detect whether or not the connector (4) is held by the holder (4). The controller (12) is configured, when detecting, through the connector detector (48), a change from a state that the connector (3) is detached from the holder (4) to a state that the connector (3) is held by the holder (4), (a) to control the connector-side switch (30) so that the electrical connection is made and then to detect the presence or absence of the malfunction in the connector-side switch (30) based on the measurement results of the first and second voltmeters (45 and 15), and also (b) to control the connector-side switch (30) so that the electrical connection is broken and then to detect the presence or absence of the malfunction in the connector-side switch (30) based on the measurement results of the first and second voltmeters (45 and 15).

In an embodiment, the connector-side switch (30) includes at least one stationary contact and a moving member having at least one moving contact configured to be electrically connected to or disconnected from the at least one stationary contact.

As stated above, a controller according to the invention is configured to detect presence of a malfunction in a connector-side switch, and it is accordingly possible to make malfunction diagnosis for a switch provided in a connector.

### Brief Description of Drawings

Preferred embodiments of the invention will now be described in further details. Other features and advantages of the present invention will become better understood with regard to the following detailed description and accompanying drawings where:
FIG. 1 is a block diagram showing a configuration of a vehicle power device in charging in accordance with Embodiment 1;
FIG. 2 is a schematic external view of the vehicle power device in accordance with the embodiment, which is neither in charging nor in discharging; and
FIG. 3 is a block diagram showing a configuration of the vehicle power device in accordance with the embodiment, which is neither in charging nor in discharging.

### Description of Embodiments

### (EMBODIMENT 1)

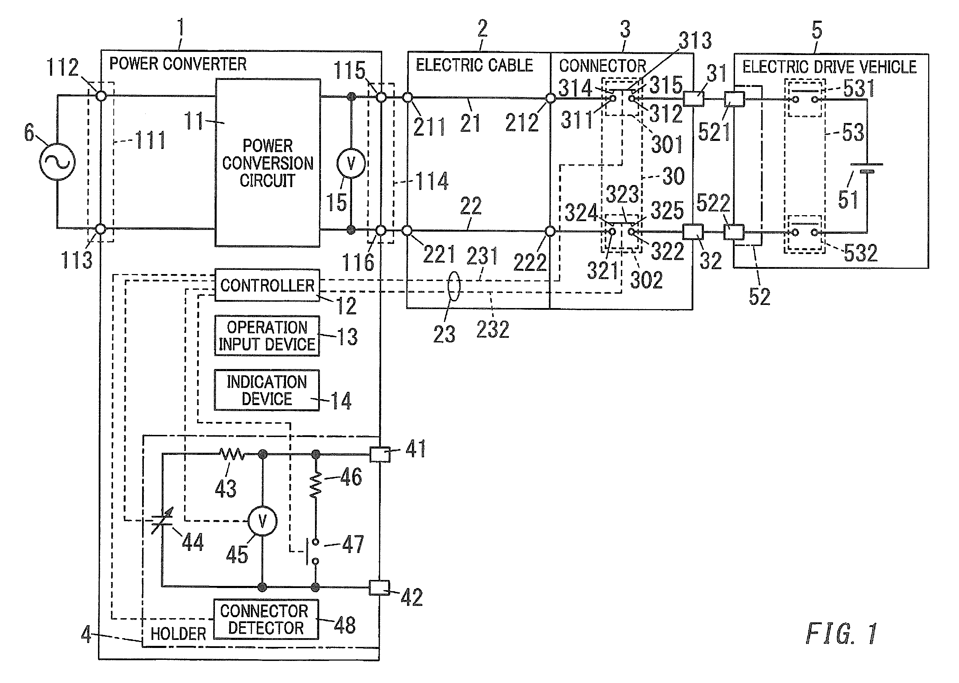

FIG. 1 exemplifies a configuration of a vehicle (electric) power device in accordance with the embodiment. The vehicle power device is configured to supply charging power to a storage battery 51, which an electric drive vehicle (EDV) 5 such as an electric vehicle (EV) or a plug-in hybrid electric vehicle (PHEV) is equipped with, to charge the storage battery 51. That is, the power converter 1 according to the embodiment functions as at least a battery charger.

In a concrete example of FIG. 1, the vehicle power device has not only the function configured to charge the storage battery 51 of the electric drive vehicle 5 but also a function configured to allow electrical discharge from the storage battery 51 to a household load(s) (Vehicle-to-Home: V2H) and electrical discharge from the storage battery 51 to a commercial power supply 6 (a utility grid) (Vehicle-to-Grid: V2G).

The vehicle power device includes a power converter 1, an electric cable 2, a connector 3 and a holder 4.

The power converter 1 is formed of a power conversion circuit 11, a controller 12, an operation input device 13, an indication device 14 and a voltmeter 15.

The power conversion circuit 11 includes a first port 111 and a second port 114 and is configured to, at least, convert electric power from the first port 111 into direct-current power to supply the direct-current power as the charging power to the storage battery 51, which the electric drive vehicle 5 is equipped with, through the second port 114. The first port 111 has a first terminal 112 and a second terminal 113, while the second port 114 has a third terminal 115 and a fourth terminal 116. In an example, the electric power from the first port 111 is alternating-current power from the commercial power supply 6. In another example, the electric power from the first port 111 is alternating-current power or direct-current power from a Photovoltaic system.

In the embodiment, the power conversion circuit 11 is further configured to convert direct-current power supplied from the storage battery 51 via the second port 114 into electric power for the first port 111 to supply the electric power to an outside (the commercial power supply 6 or a household load(s)) via the first port 111. For example, the power conversion circuit 11 is a bidirectional AC/DC converter and configured to convert the direct-current power into alternating-current power. In this case, each of the first port 111 and the second port 114 functions as an input and output port. In an example, if the electric power from the first port 111 is direct-current power, the power conversion circuit 11 may be formed of a bidirectional DC/DC converter, for example.

In the example of FIG. 1, the power conversion circuit 11 is configured to convert discharging power, supplied to the second port 114 (third and fourth input-output terminals 115 and 116) via the electric cable 2 from the storage battery 51, into alternating-current power to supply the alternating-current power to the outside via the first port 111. The outside is the commercial power supply 6 but may be a household load(s). That is, the power converter 1 functions as a battery charger-discharger. However, if the power converter 1 (the power conversion circuit 11) functions as only a charger configured to charge the storage battery 51, the first and second terminals 112 and 113 are input terminals, and the third and fourth terminals 115 and 116 are output terminals.

The electric cable 2 includes a first electric wire 21 and a second electric wire 22, and a first end 211 of the first electric wire 21 and a first end 221 of the second electric wire 22 are electrically connected to the second port 114. Specifically, the first end 211 of the first electric wire 21 is electrically connected to the third terminal 115 of the second port 114, while the first end 221 of the second electric wire 22 is electrically connected to the fourth terminal 116 of the second port 114. On the other hand, a second end 212 of the first electric wire 21 and a second end 222 of the second electric wire 22 are electrically connected to the connector 3.

In the example of FIG. 1, the electric cable 2 is used for supply of charging power from the second port 114 of the power conversion circuit 11 to the storage battery 51 as well as supply of discharging power from the storage battery 51 to the second port 114.

The electric cable 2 further includes a signal line 23 through which an ON and OFF control signal is to be transmitted from the controller 12 to a connector-side switch 30 to be described later. The signal line 23 includes at least one electric wire.

In the embodiment, as shown in the example of FIG. 1, the signal line 23 includes a first electric wire 231 and a second electric wire 232. First ends of the first and second electric wires 231 and 232 are electrically connected to the controller 12, while second ends of the first and second electric wires 231 and 232 are electrically connected to the connector-side switch 30.

The electric cable 2 is further provided with the connector 3. The connector 3 includes a first electrode 31 and a second electrode 32 and is configured so that the first and second electrodes 31 and 32 are detachably connected to an inlet 52 provided in an external surface side of a body of the electric drive vehicle 5. The first electrode 31 and the second electrode 32 are electrically connected to the second end 212 of the first electric wire 21 and the second end 222 of the second electric wire 22 via the connector-side switch 30, respectively.

The inlet 52 includes a first electrode 521 and a second electrode 522. In the embodiment, the first and second electrodes 31 and 32 of the connector 3 are to be detachably connected to the first and second electrodes 521 and 522, respectively.

In the example of FIG. 1, the first and second electrodes 521 and 522 are electrically connected to the storage battery 51 via a vehicle-side switch 53. Specifically, the first electrode 521 is electrically connected to a positive electrode of the storage battery 51 via the vehicle-side switch 53, while the second electrode 522 is electrically connected to a negative electrode of the storage battery 51 via the vehicle-side switch 53.

The vehicle-side switch 53 includes a first switch 531 and a second switch 532. The first switch 531 is intervened between the first electrode 521 and the positive electrode of the storage battery 51. The second switch 532 is intervened between the second electrode 522 and the negative electrode of the storage battery 51. In an example, the vehicle-side switch 53 is a DPST (Double Pole Single Throw) relay. However, the vehicle-side switch 53 accordance to the embodiment is not limited thereto. For example, the vehicle-side switch 53 may be formed of an SPST (Single Pole Single Throw) relay intervened between the first electrode 521 and the positive electrode of the storage battery 51, and an SPST relay intervened between the second electrode 522 and the negative electrode of the storage battery 51.

In the vehicle power device configured as described above, the power conversion circuit 11 of the power converter 1 can supply charging power to the storage battery 51 of the electric drive vehicle 5 via the electric cable 2, the connector 3 and the inlet 52. In the power conversion circuit 11, discharging power from the storage battery 51 of the electric drive vehicle 5 can be supplied to the power conversion circuit 11 via the electric cable 2, the connector 3 and the inlet 52. A controller (not shown) which the electric drive vehicle 5 is equipped with is configured to turn on and off the vehicle-side switch 53. For example, the vehicle-side switch 53 is controlled so that it is turned on when the storage battery 51 is allowed to charge and discharge. Regardless of whether the storage battery 51 is allowed to charge and discharge, the vehicle-side switch 53 is also controlled so that it is turned off not only when a malfunction occurs but also neither in charging nor in discharging, when the storage battery neither charges nor discharges.

The connector-side switch 30 is housed in the connector 3. The connector-side switch 30 is configured to make and break electrical connection between the second port 114 of the power conversion circuit 11 (the power converter 1) and the first and second electrodes 31 and 32. In the embodiment, the connector-side switch 30 includes a first switch 301 and a second switch 302 which are configured to be individually controlled by the controller 12. As an example, each of the first and second switches 301 and 302 may be an SPST relay.

The first switch 301 is configured to receive ON and OFF control (a control signal) by the controller 12 via the first electric wire 231. The first switch 301 is also configured to make and break electrical connection between the second port 114 of the power converter 1 and the first electrode 31 in accordance with ON and OFF control by the controller 12, respectively.

The second switch 302 is configured to receive ON and OFF control (a control signal) by the controller 12 via the second electric wire 232. The second switch 302 is also configured to make and break electrical connection between the second port 114 of the power converter 1 and the second electrode 32 in accordance with ON and OFF control by the controller 12, respectively.

In the concrete example of FIG. 1, the first switch 301 includes: a first stationary contact 311 that is electrically connected with the second end 212 of the first electric wire 21; a second stationary contact 312 that is electrically connected with the first electrode 31; and a first moving member 313. The first moving member 313 has a first moving contact 314 to be electrically connected to or disconnected from the first stationary contact 311, and a second moving contact 315 to be electrically connected to or disconnected from the second stationary contact 312.

The second switch 302 includes: a third stationary contact 321 that is electrically connected with the second end 222 of the second electric wire 22; a fourth stationary contact 322 that is electrically connected with the second electrode 32; and a second moving member 323. The second moving member 323 has a third moving contact 324 to be electrically connected to or disconnected from the third stationary contact 321, and a fourth moving contact 325 to be electrically connected to or disconnected from the fourth stationary contact 322.

The connector-side switch 30 makes and breaks electrical connection as a power line for supply of charging power and discharging power when being controlled so that it is turned on and off in accordance with a control signal transmitted from the controller 12 via the signal line 23 of the electric cable 2. The controller 12 is configured, when allowing the storage battery 51 to charge and discharge, to control the connector-side switch 30 so that it is turned on. The controller 12 is also configured to control the connector-side switch 30 so that it is turned off, when receiving, from a malfunction detecting circuit (not shown), a malfunction signal representing a malfunction of a charging voltage, a malfunction of a charging current, a malfunction of a discharging voltage, a malfunction of a discharging current, a malfunction in a side of the vehicle, or the like. In the embodiment, the controller 12 can control the connector-side switch 30 so that the first and second switches 301 and 302 are turned on and off individually and independently.

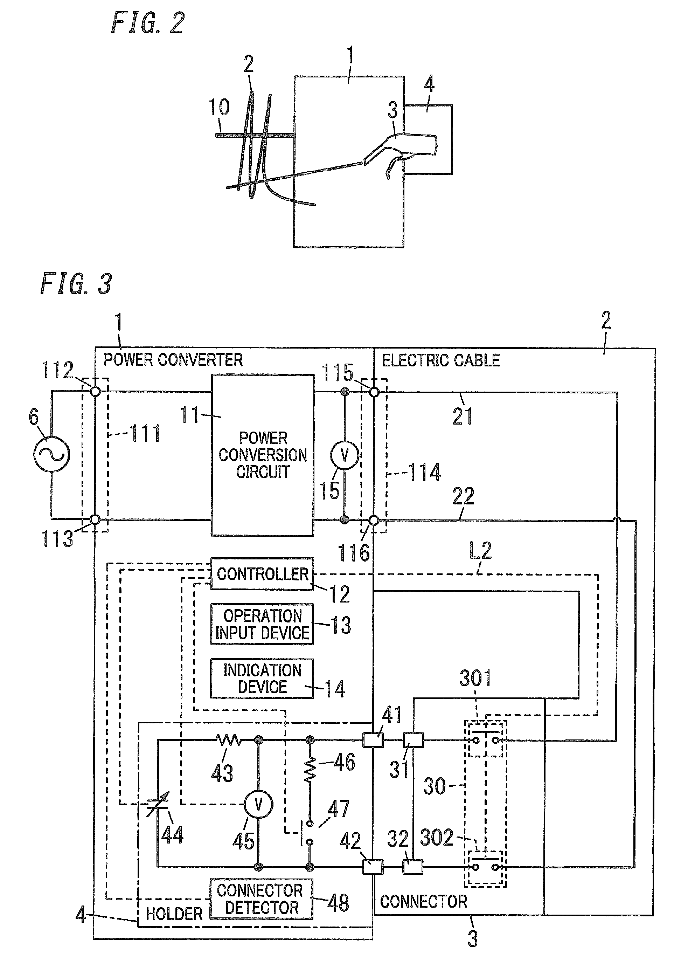

For example, the connector 3 can be detached from the inlet 52 to be received and held by the holder 4 neither in charging nor in discharging when the storage battery 51 neither charges nor discharges (see FIG. 2). When the storage battery 51 neither charges nor discharges, the electric cable 2 can be wound around a hold bar 10 which the power converter 1 is provided with, and the connector 3 can be received and held by the holder 4 which the power converter 1 is provided with.

The vehicle power device is configured to detect presence of a malfunction of the connector-side switch 30 when it is detected that the connector 3 is held by the holder 4. FIG. 3 is a circuit diagram of the vehicle power device with the connector 3 held by the holder 4. A configuration for the malfunction detecting operation of the connector-side switch 30 will be hereinafter explained. One example of the configuration is explained, in which the malfunction detecting operation of the connector-side switch 30 is performed in accordance with a charging operation for starting charging of the storage battery 51.

The holder 4 is configured to hold the connector 3 with the connector 3 and the inlet 52 disconnected from each other. The holder 4 is integrally formed with the power converter 1, and has first and second electrodes 41 and 42 to be in contact with the first and second electrodes 31 and 32 of the connector 3 held by the holder 4, respectively.

The vehicle power device includes a voltage generator 44, a voltmeter 45 (a first voltmeter) and a discharge circuit. In the embodiment, the holder 4 is provided with the voltage generator 44, the voltmeter 45 and the discharge circuit.

The voltage generator 44 is electrically connected between the first and second electrodes 41 and 42 via a current limiting device 43. The voltage generator 44 is configured to apply a voltage across the first and second electrodes 31 and 32 of the connector 3 held by the holder 4. In the embodiment, the voltage generator 44 is configured to generate a variable voltage (an output voltage) in accordance with variable control by the controller 12.

The voltmeter 45 is electrically connected between the first and second electrodes 41 and 42. The voltmeter 45 is configured to measure a voltage between the first and second electrodes 41 and 42, namely the first and second electrodes 31 and 32 of the connector 3 held by the holder 4 to supply a value of the measured voltage to the controller 12.

The discharge circuit includes a series circuit, of a discharge device (e.g., a resistor 46) and a switch 47, electrically connected between the first and second electrodes 41 and 42. The discharge circuit is configured, in accordance with control (a control signal) by the controller 12, to be temporarily and electrically connected between the first and second electrodes 31 and 32 of the connector 3 held by the holder 4. The switch 47 is controlled by the controller 12 so that it is turned on and off. The switch 47 may be formed of a semiconductor switch device such as FET, for example.

The holder 4 further includes a connector detector 48. The connector detector 48 is configured to detect whether or not the holder 4 holds the connector 3, and to supply a detection result to the controller 12. For example, the connector detector 48 may be formed of a limit switch, a proximity switch or the like, and be configured to mechanically or electrically detect the connector 3 held by the holder 4. In the embodiment, the controller 12 is also configured to prohibit the power conversion circuit 11 from operating when it is detected that the connector 3 and the inlet 52 are disconnected from each other. Therefore, the vehicle power device further includes an inlet detector configured to detect whether or not the connector 3 is connected to the inlet 52, and to supply a detection result to the controller 12.

The power converter 1 further includes the voltmeter 15 (a second voltmeter). The voltmeter 15 is configured to measure a voltage of the second port 114 when it is detected that the connector 3 is held by the holder 4, and then to supply a value of the measured voltage to the controller 12. In the embodiment, the voltmeter 15 is configured to measure a voltage across the third and fourth ends 115 and 116 of the second port 114.

The controller 12 is formed of, for example, a microcomputer, a memory device and the like, and configured to perform, but not limited to, for example, different processes of a process for a CPLT (control pilot) function and the like. The controller 12 is especially configured to detect presence or absence of a malfunction in the connector-side switch 30 based on: measurement results of the first and second voltmeters 45 and 15 while controlling the connector-side switch 30 so that electrical connection between the second port 114 and the first and second electrodes 31 and 32 (hereinafter simply called "electrical connection") is broken; and measurement results of the first and second voltmeters 45 and 15 while controlling the connector-side switch 30 so that the electrical connection is made.

In the embodiment, the first and second switches 301 and 302 are configured to be individually controlled by the controller 12. The controller 12 is accordingly configured to detect presence or absence of a malfunction in the connector-side switch based on first to third measurement results. The first measurement result is obtained from the first and second voltmeters 45 and 15 while the controller 12 is in operation so that both the first and second switches 301 and 302 are turned off. The second measurement result is obtained from the first and second voltmeters 45 and 15 while the controller 12 is in operation so that the first and second switches 301 and 302 are turned off and on, respectively. The third measurement result is obtained from the first and second voltmeters 45 and 15 while the controller 12 is in operation so that the first and second switches 301 and 302 are turned on and off, respectively.

The operation input device 13 is configured, in accordance with a user's operation, to detect different operations including a charging operation, a discharging operation for allowing the storage battery 51 to start discharging, and the like, and to supply a detection result (different instructions) to the controller 12. A user can therefore perform, through the operation input device 13, the charging operation for allowing the storage battery 51 to start charging, for example.

In the vehicle power device configured as described above, when detecting the charging operation through the operation input device 13, the controller 12 locks the connector 3 in the holder 4 if the connector detector 48 detects that the connector 3 is held by the holder 4. In the embodiment, the connector 3 is configured to be mechanically fixed to the holder 4 with a latch mechanism including an engaging claw (not shown) and the like. The connector 3 also includes a lock mechanism (not shown) configured to lock the holder 4 latched by the latch mechanism. The lock mechanism includes a solenoid valve and is configured to switch between lock and unlock thereof by the solenoid valve when it is driven. The controller 12 is configured to drive the solenoid valve via a signal line (not shown) in the electric cable 2 to control the lock mechanism so that it is switched between lock and unlock.

The controller 12 then indicates to the user through the indication device 14 that the connector-side switch 30 is in test. In the embodiment, the indication device 14 has a liquid crystal display, a speaker and the like, and is configured to indicate through indication by the liquid crystal display and a sound by the speaker that the connector-side switch 30 is in test.

When detecting the charging operation through the operation input device 13, if it is detected that the connector 3 is not held by the holder 4, the controller 12 indicates, to the user through the indication device 14, a message for prompting the user to return the connector 3 to the holder 4 to perform the charging operation.

When detecting the charging operation through the operation input device 13, if it is detected that the connector 3 is held by the holder 4, the controller 12 controls the connector-side switch 30 so that both the first and second switches 301 and 302 are turned on, and also controls the switch 47 so that it is turned on, thereby allowing a residual electric charge in the power line to discharge via the resistor 46. In the present embodiment, the holder 4 is provided with the discharge circuit formed of the resistor 46 and the switch 47. It is therefore possible to allow the residual electric charge between the first and second electrodes 31 and 32 and the voltage generator 44 to discharge regardless of ON and OFF states of the connector-side switch 30.

The controller 12 monitors voltages measured with the voltmeters 45 and 15. When the residual electric charge discharges and the voltages measured with the voltmeters 45 and 15 become 0V, the controller controls the switch 47 so that it is turned off, and also controls the connector-side switch 30 so that both the first and second switches 301 and 302 are turned off. The controller 12 then increases the variable voltage of the voltage generator 44 to a test voltage from 0V, and detects presence or absence of a malfunction in the connector-side switch 30 based on voltages measured with the voltmeters 45 and 15 (a first malfunction detecting step). The test voltage is a voltage in a range of about 10V to 20V, for example. Specifically, when the voltage measured with the voltmeter 45 is equal to the test voltage and the voltage measured with the voltmeter 15 is equal to the test voltage or a specified voltage or more, the controller 12 detects the presence of a weld in the connector-side switch 30. The specified voltage may be set to a voltage that is above 0V and below the test voltage. The controller 12 also performs a process of a next second malfunction detecting step when the voltage measured with the voltmeter 45 is equal to the test voltage and the voltage measured with the voltmeter 15 is equal to 0V.

The process of the second malfunction detecting step is explained. The controller 12 controls the connector-side switch 30 so that the first and second switches 301 and 302 are turned on and off, respectively. The controller 12 detects presence or absence of a malfunction in the second switch 302 of the connector-side switch 30 based on voltages measured with the voltmeters 45 and 15. Specifically, when the voltage measured with the voltmeter 45 is equal to the test voltage and the voltage measured with the voltmeter 15 is equal to the test voltage or the specified voltage or more, the controller 12 detects the presence of a weld in the second switch 302 of the connector-side switch 30. The controller 12 performs a process of a next third malfunction detecting step when the voltage measured with the voltmeter 45 is equal to the test voltage and the voltage measured with the voltmeter 15 is equal to 0V.

The process of the third malfunction detecting step is explained. The controller 12 controls the connector-side switch 30 so that the first and second switches 301 and 302 are turned off and on, respectively. The controller 12 then detects presence or absence of a malfunction in the first switch 301 of the connector-side switch 30 based on voltages measured with the voltmeters 45 and 15. Specifically, when the voltage measured with the voltmeter 45 is equal to the test voltage and the voltage measured with the voltmeter 15 is equal to 0V, the controller 12 detects that the connector-side switch 30 is normal. When the voltage measured with the voltmeter 45 is equal to the test voltage and the voltage measured with the voltmeter 15 is equal to the test voltage or the specified voltage or more, the controller 12 detects presence of a weld in the first switch 301 of the connector-side switch 30.

When detecting the presence of a malfunction in the connector-side switch 30 in the processes of the first to third malfunction detecting steps or when detecting that the connector-side switch 30 is normal in the process of the third malfunction detecting step, the controller 12 decreases the variable voltage of the voltage generator 44 to 0V. The controller 12 then controls the connector-side switch 30 so that both the first and second switches 301 and 302 are turned on, and also controls the switch 47 so that it is turned on, thereby allowing a residual electric charge in the power line to discharge via the resistor 46.

The controller 12 then controls the connector-side switch 30 so that both the first and second switches 301 and 302 are turned off. The controller then releases the connector 3 from being locked to the holder 4, and indicates, to a user through the indication device 14, the completion of the malfunction detecting operation along with a detection result thereof.

When the connector-side switch 30 is normal, the user can connect the connector 3 to the inlet 52 of the electric drive vehicle 5 to cause the power converter 1 to start a charging sequence. When a weld as a malfunction occurs in at least one of the first and second switches 301 and 302 of the connector-side switch 30, the controller 12 prohibits the power conversion circuit 11 from performing the charging operation. In this case, the user can stop using the power converter 1 to take actions such as part replacement.

The vehicle power device can make malfunction diagnosis for the connector-side switch 30 provided in the connector 3 and improve safety thereof. In the embodiment, malfunction diagnosis is made before the storage battery 51 charges whenever the charging operation is performed, but the operation input device 13 may be configured to detect a diagnosis operation for starting malfunction diagnosis to supply a detection result to the controller 12. In this case, it is desirable that the controller 12 make malfunction diagnosis for the connector-side switch 30 as stated above when detecting the diagnosis operation through the operation input device 13.

In the vehicle power device, the holder 4 is provided with the voltage generator 44 as a test power supply that is used for the malfunction detecting operation of the connector-side switch 30. The test voltage generated by the voltage generator 44 is set to a voltage in the range of 10V to 20V In the embodiment, if the power conversion circuit 11 of the power converter 1 is employed as the test power supply, it takes a time to start the malfunction detecting operation of the connector-side switch 30 because a time to actuate the power conversion circuit 11 is required. In addition, an output voltage of the power conversion circuit 11 is generally about 500V, and the voltmeter 45, the resistor 46 and the switch 47 require a design for high breakdown voltage. This results in an increase in cost and size.

In the vehicle power device according to the embodiment, it is unnecessary to employ the power conversion circuit 11 of the power converter 1 as the test power supply, for the holder 4 is provided with the voltage generator 44 as the test power supply to be used for the malfunction detecting operation of the connector-side switch 30. It is therefore possible to not only shorten time needed to start the malfunction detecting operation of the connector-side switch 30 but also reduce in cost and size.

In a case of electrical discharge from the storage battery 51 to an outside (electrical discharge to a household load(s) (V2H) or electrical discharge to a utility grid (V2G)), a user can perform, through the operation input device 13, a discharging operation for staring discharging of the storage battery 51. In this case, it is desirable that the controller 12 perform the malfunction detecting operation of the connector-side switch 30 like the aforementioned charging operation when detecting the discharging operation through the operation input device 13.

### (EMBODIMENT 2)

A vehicle power device in accordance with the embodiment has a configuration as shown in FIGS. 1 to 3 like Embodiment 1, and like kind elements are assigned the same reference numerals as depicted in Embodiment 1 and not described in detail herein.

A malfunction detecting operation of a connector-side switch 30 is hereinafter explained. In the embodiment, the connector-side switch 30 includes first and second switches 301 and 302 configured to be controlled together by a controller 12 (see FIG. 3). As an example, the connector-side switch 30 may be a DPST relay.

The controller 12 is configured to control the connector-side switch 30 so that both the first and second switches 301 and 302 are turned on and off together. In the embodiment, the controller 12 is configured to detect presence or absence of a malfunction in the connector-side switch 30 based on: measurement results of the first and second voltmeters 45 and 15 while controlling the connector-side switch so that both the first and second switches 301 and 302 are turned off; and measurement results of the first and second voltmeters 45 and 15 while controlling the connector-side switch so that both the first and second switches 301 and 302 are turned on.

In the vehicle power device configured as described above, when a user performs a charging operation for starting charging of a storage battery 51 through an operation input device 13, the controller 12 detects the charging operation through the operation input device 13. The controller 12 then locks a connector 3 to a holder 4 if a connector detector 48 detects that the connector 3 is held by the holder 4. The controller 12 then indicates to the user via an indication device 14 that the connector-side switch 30 is in test.

When detecting the charging operation through the operation input device 13, if it is detected that the connector 3 is not held by the holder 4, the controller 12 indicates, to the user through the indication device 14, a message for prompting the user to return the connector 3 to the holder 4 to perform the charging operation.

After detecting the charging operation through the operation input device 13, if it is detected that the connector 3 is held by the holder 4, the controller 12 controls the connector-side switch 30 so that both the first and second switches 301 and 302 are turned on, and also controls the switch 47 so that it is turned on, thereby allowing a residual electric charge in the power line to discharge via a resistor 46.

The controller 12 monitors voltages measured with the voltmeters 45 and 15. When the residual electric charge discharges and the voltages measured with the voltmeters 45 and 15 become 0V, the controller controls the switch 47 so that it is turned off, and also controls the connector-side switch 30 so that both the first and second switches 301 and 302 are turned off. The controller 12 then increases a variable voltage of a voltage generator 44 to a test voltage from 0V, and detects presence or absence of a malfunction in the connector-side switch 30 based on voltages measured with the voltmeters 45 and 15 (a first malfunction detecting step). The test voltage is a voltage in a range of about 10V to 20V, for example. Specifically, when the voltage measured with the voltmeter 45 is equal to the test voltage and the voltage measured with the voltmeter 15 is equal to the test voltage or the specified voltage or more, the controller 12 detects the presence of a weld in the connector-side switch 30. The controller 12 also performs a process of a next second malfunction detecting step when the voltage measured with the voltmeter 45 is equal to the test voltage and the voltage measured with the voltmeter 15 is equal to 0V.

The process of the second malfunction detecting step is explained. The controller 12 controls the connector-side switch 30 so that it is turned on. The controller 12 then detects presence or absence of a malfunction in the connector-side switch 30 based on voltages measured with the voltmeters 45 and 15. Specifically, when the voltage measured with the voltmeter 45 is equal to the test voltage and the voltage measured with the voltmeter 15 is equal to the test voltage, the controller 12 detects that the connector-side switch 30 is normal. When the voltage measured with the voltmeter 45 is equal to the test voltage and the voltage measured with the voltmeter 15 is equal to 0V, the controller 12 detects the presence of a malfunction (e.g., ON and OFF malfunction) in at least one of the first and second switches 301 and 302 of the connector-side switch 30.

When detecting the presence of a malfunction in the connector-side switch 30 in the processes of the first and second malfunction detecting steps, or when detecting that the connector-side switch 30 is normal in the process of the second malfunction detecting step, the controller 12 decreases the variable voltage of the voltage generator 44 to 0V. The controller 12 then controls the connector-side switch 30 so that both the first and second switches 301 and 302 are turned on, and also controls the switch 47 so that it is turned on, thereby allowing a residual electric charge in the power line to discharge via the resistor 46.

The controller 12 controls the connector-side switch 30 so that both the first and second switches 301 and 302 are turned off. The controller then releases the connector 3 from being locked to the holder 4, and indicates, to the user through the indication device 14, the completion of the malfunction detecting operation along with a detection result thereof.

When the connector-side switch 30 is normal, the user can connect the connector 3 to the inlet 52 of the electric drive vehicle 5 to cause the power converter 1 to start a charging sequence. When a weld as a malfunction (or, e.g., ON and OFF malfunction) occurs in at least one of the first and second switches 301 and 302 of the connector-side switch 30, the controller 12 prohibits the power conversion circuit 11 from performing the charging operation. In this case, the user can stop using the power converter 1 to take actions such as part replacement.

The vehicle power device can therefore make malfunction diagnosis for the connector-side switch 30 provided in the connector 3 and improve safety thereof.

In a case of electrical discharge from the storage battery 51 to an outside (electrical discharge to a household load(s) (V2H) or electrical discharge to a utility grid (V2G)), a user can perform a discharging operation for staring discharge of the storage battery 51 with the operation input device 13. In this case, it is desirable that the controller 12 perform the malfunction detecting operation of the connector-side switch 30 like the aforementioned charging operation when detecting the discharging operation through the operation input device 13.

### (EMBODIMENT 3)

A vehicle power device in accordance with the embodiment has a configuration as shown in FIGS. 1 to 3 like Embodiment 1, and like kind elements are assigned the same reference numerals as depicted in Embodiment 1 and not described in detail herein.

A malfunction detecting operation of a connector-side switch 30 is hereinafter explained. In the embodiment, a controller 12 is configured to perform first and second judgments when detecting, through a connector detector 48, a change from a state in which a connector 3 is detached from a holder 4 to a state in which the connector 3 is held by the holder 4. That is, the controller 12 is configured to control the connector-side switch 30 so that electrical connection is made between a second port 114 and first and second electrodes 31 and 32, and then to detect presence or absence of a malfunction in the connector-side switch 30 based on measurement results of first and second voltmeters 45 and 15 (First Judgment). The controller 12 is also configured to control the connector-side switch 30 so that the electrical connection is broken, and then to detect presence or absence of the malfunction in the connector-side switch 30 based on the measurement results of the first and second voltmeters 45 and 15 (Second Judgment). The connector-side switch 30 includes first and second switches 301 and 302 configured to be controlled together by the controller 12. As an example, the connector-side switch 30 may be a DPST relay.

In the vehicle power device configured as described above, when a user performs a charging operation for starting charging of a storage battery 51 through an operation input device 13, the controller 12 detects the charging operation through the operation input device 13. The controller 12 then locks the connector 3 to the holder 4 if the connector detector 48 detects that the connector 3 is held by the holder 4. At this time, since the connector 3 is held by the holder 4, the connector-side switch 30 is in ON-state. The controller 12 then indicates, to the user through an indication device 14, that the connector-side switch 30 is in test. When detecting the charging operation through the operation input device 13, if it is detected that the connector 3 is not held by the holder 4, the controller 12 indicates, to the user through the indication device 14, a message for prompting the user to return the connector 3 to the holder 4 to perform the charging operation.

When the connector 3 is held by the holder 4, the first and second switches 301 and 302 of the connector-side switch 30 are in ON-state. The controller 12 controls a switch 47 so that it is turned on, thereby allowing a residual electric charge in the power line to discharge through a resistor 46.

The controller 12 monitors voltages measured with the voltmeters 45 and 15. When the residual electric charge discharges and the voltages measured with the voltmeters 45 and 15 become 0V, the controller controls the switch 47 so that it is turned off. The controller 12 then increases a variable voltage of a voltage generator 44 to a test voltage from 0V, and detects presence or absence of a malfunction in the connector-side switch 30 based on voltages measured with the voltmeters 45 and 15 (a first malfunction detecting step). The test voltage is a voltage in a range of about 10V to 20V, for example. Specifically, when the voltage measured with the voltmeter 45 is equal to the test voltage and the voltage measured with the voltmeter 15 is equal to 0V, the controller 12 detects the presence of a malfunction (e.g., ON and OFF malfunction) in at least one of the first and second switches of the connector-side switch 30. The controller 12 then decreases the variable voltage of the voltage generator 44 to 0V to control the switch 47 so that it is turned on, thereby allowing a residual electric charge in the power line to discharge through the resistor 46. The controller 12 also performs a process of a next second malfunction detecting step when the voltage measured with the voltmeter 45 is equal to the test voltage and the voltage measured with the voltmeter 15 is equal to the test voltage.

The process of the second malfunction detecting step is explained. The controller 12 controls the connector-side switch 30 so that it is turned off. The controller 12 then increases a voltage across the voltage generator 44 to the test voltage from 0V and then detects presence or absence of a malfunction in the connector-side switch 30 based on voltages measured with the voltmeters 45 and 15. Specifically, when the voltage measured with the voltmeter 45 is equal to the test voltage and the voltage measured with the voltmeter 15 is equal to 0V, the controller 12 detects that the connector-side switch 30 is normal. When the voltage measured with the voltmeter 45 is equal to the test voltage and the voltage measured with the voltmeter 15 is equal to the test voltage or the specified voltage or more, the controller 12 detects the presence of a weld in the connector-side switch 30.

When detecting the presence of a malfunction in the connector-side switch 30 in the processes of the first and second malfunction detecting steps, or when detecting that the connector-side switch 30 is normal in the process of the second malfunction detecting step, the controller 12 decreases the voltage across the voltage generator 44 to 0V. The controller 12 then controls the switch 47 so that it is turned on, thereby allowing a residual electric charge in the power line to discharge via the resistor 46. In the embodiment, it is desirable that a discharge circuit for allowing the residual electric charge in the power line to discharge be provided in a side of the electric drive vehicle 5.

The controller 12 then releases the connector 3 from being locked to the holder 4, and indicates, to the user through the indication device 14, the completion of the malfunction detecting operation along with a detection result thereof.

When the connector-side switch 30 is normal, the user can connect the connector 3 to the inlet 52 of the electric drive vehicle 5 to cause the power converter 1 to start a charging sequence. When a weld as a malfunction (or, e.g., ON and OFF malfunction) occurs in at least one of the first and second switches 301 and 302 of the connector-side switch 30, the controller 12 prohibits the power conversion circuit 11 from performing the charging operation. In this case, the user can stop using the power converter 1 to take actions such as part replacement.

The vehicle power device can therefore make malfunction diagnosis for the connector-side switch 30 provided in the connector 3 and improve safety thereof.

In a case of electrical discharge from the storage battery 51 to an outside (discharge to a household load(s) (V2H) or electrical discharge to a utility grid (V2G)), a user can perform a discharging operation with the operation input device 13. In this case, it is desirable that the controller 12 perform the malfunction detecting operation of the connector-side switch 30 like the aforementioned charging operation when detecting, through the operation input device 13, the discharging operation for staring discharging of the storage battery 51.

In each embodiment as stated above, a malfunction detecting operation of a connector-side switch 30 is performed according to a charging operation as a trigger by a user, but is not limited thereto. For example, the malfunction detecting operation of the connector-side switch 30 may be performed when another trigger (e.g., a timing of the completion of a clocking operation by a timer circuit) is generated while the power converter 1 neither charges nor discharges, or when a user returns the connector 3 to the holder 4 after the storage battery 51 finishes charging.

A connector-side switch according to the invention is not limited to the configuration of FIG. 1. An example of a connector-side switch according to the invention may include a first switch that includes a stationary contact electrically connected to one of a second end 212 of a first electric wire 21 and a first electrode 31, and a moving member having a moving contact that is electrically connected to the other and configured to be electrically connected to or disconnected from the stationary contact. The connector-side switch according to the invention may also include a second switch that includes a stationary contact electrically connected to one of a second end 222 of a second electric wire 22 and a second electrode 32, and a moving member having a moving contact that is electrically connected to the other and configured to be electrically connected to or disconnected from the stationary contact. An example of each moving member of the first and second switches is an electrically conductive member such as a metal plate.

Another example of a connector-side switch according to the invention may include a single switch intervening between one set (hereinafter called "a target second end and a target electrode") of: a second end 212 of a first electric wire 21 and a first electrode 31; and a second end 222 of a second electric wire 22 and a second electrode 32. The single switch may include first and second stationary contacts electrically connected to the target second end and the target electrode, respectively, and a moving member having first and second moving contacts configured to be electrically connected to or disconnected from the first and second stationary contacts, respectively. An example of the moving member is an electrically conductive member such as a metal plate. Another example of the single switch may include a stationary contact electrically connected to one of the target second end and the target electrode, and a moving member having a moving contact that is electrically connected to the other and configured to be electrically connected to or disconnected from the stationary contact, where an example of the moving member is an electrically conductive member such as a metal plate.

In short, a connector-side switch according to the invention may include at least one stationary contact, and a moving member (an electrically conductive member) having at least one moving contact configured to be electrically connected to or disconnected from the at least one stationary contact. A vehicle power device according to the invention may be configured to detect presence of a weld (a contact weld) between the at least one stationary contact and the at least one moving contact. It is desirable that the vehicle power device according to the invention (e.g., a controller) prohibit a power converter 1 from being activated after detecting the presence of the weld. For example, the power converter 1 may be prohibited from being activated until the vehicle power device is reset or the presence of the contact weld is not detected any longer.

## Claims

1. A vehicle power device, comprising:
a power converter that comprises a first port and a second port and is configured to, at least, convert electric power from the first port into direct-current power to supply the direct-current power to a storage battery, which an electric drive vehicle is equipped with, through the second port;
an electric cable including a first electric wire and a second electric wire, respective first ends of which are connected to the second port;
a connector that comprises a first electrode and a second electrode and is configured so that the first and second electrodes are detachably connected to an inlet of the electric drive vehicle;
a holder configured to hold the connector with the connector and the inlet disconnected from each other; and
a voltage generator configured to apply a voltage across the first and second electrodes of the connector held by the holder, wherein
the connector further comprises a connector-side switch configured to make and break electrical connection between the second port of the power converter and the first and second electrodes,
the holder further comprises a first voltmeter configured to measure a voltage between the first and second electrodes of the connector held by the holder, and
the power converter comprises
a second voltmeter configured to measure a voltage of the second port when the connector is held by the holder, and
a controller configured to detect presence or absence of a malfunction in the connector-side switch based on: measurement results of the first and second voltmeters while controlling the connector-side switch so that the electrical connection is broken; and measurement results of the first and second voltmeters while controlling the connector-side switch so that the electrical connection is made.

2. The vehicle power device of claim 1, wherein the power converter is further configured to convert direct-current power supplied from the storage battery via the second port into electric power for the first port to supply the electric power to an outside via the first port.

3. The vehicle power device of claim 1 or 2, wherein the holder further comprises a discharge circuit that comprises a series circuit of a discharge device and a switch and is configured, in accordance with control by the controller, to be temporarily connected between the first and second electrodes of the connector held by the holder.

4. The vehicle power device of any one of claims 1 to 3, wherein the holder is provided with the voltage generator.

5. The vehicle power device of any one of claims 1 to 4, wherein
the connector-side switch comprises first and second switches configured to be individually controlled by the controller, the first switch being configured to make and break electrical connection between the second port of the power converter and the first electrode in accordance with ON and OFF control by the controller, respectively, the second switch being configured to make and break electrical connection between the second port of the power converter and the second electrode in accordance with ON and OFF control by the controller, respectively, and
the controller is configured to detect the presence or absence of the malfunction in the connector-side switch based on: measurement results of the first and second voltmeters while controlling the connector-side switch so that both the first and second switches are turned off; measurement results of the first and second voltmeters while controlling the connector-side switch so that the first and second switches are turned off and on, respectively; and measurement results of the first and second voltmeters while controlling the connector-side switch so that the first and second switches are turned on and off, respectively.

6. The vehicle power device of any one of claims 1 to 4, wherein
the connector-side switch comprises first and second switches configured to be controlled together by the controller, the first switch being configured to make and break electrical connection between the second port of the power converter and the first electrode in accordance with ON and OFF control by the controller, respectively, the second switch being configured to make and break electrical connection between the second port of the power converter and the second electrode in accordance with ON and OFF control by the controller, respectively, and
the controller is configured to detect the presence or absence of the malfunction in the connector-side switch based on: measurement results of the first and second voltmeters while controlling the connector-side switch so that both the first and second switches are turned off; and measurement results of the first and second voltmeters while controlling the connector-side switch so that both the first and second switches are turned on.

7. The vehicle power device of any one of claims 1 to 4, further comprising a connector detector configured to detect whether or not the connector is held by the holder, wherein
the controller is configured,
when detecting, through the connector detector, a change from a state that the connector is detached from the holder to a state that the connector is held by the holder,
to control the connector-side switch so that the electrical connection is made and then to detect the presence or absence of the malfunction in the connector-side switch based on the measurement results of the first and second voltmeters, and also
to control the connector-side switch so that the electrical connection is broken and then to detect the presence or absence of the malfunction in the connector-side switch based on the measurement results of the first and second voltmeters.

8. The vehicle power device of any one of claims 1 to 7, wherein the connector-side switch comprises at least one stationary contact and a moving member having at least one moving contact configured to be electrically connected to or disconnected from the at least one stationary contact.
